(19) **Europäisches Patentamt / European Patent Office / Office européen des brevets**

(11) **EP 4 706 959 A1**

(12) **EUROPEAN PATENT APPLICATION**
published in accordance with Art. 153(4) EPC

(43) Date of publication:
**11.03.2026 Bulletin 2026/11**

(21) Application number: **24797431.4**

(22) Date of filing: **25.04.2024**

(51) International Patent Classification (IPC):
**B32B 27/08** (2006.01) **B32B 27/36** (2006.01)
**C08J 5/18** (2006.01) **C08L 67/04** (2006.01)
**C08L 67/02** (2006.01)

(52) Cooperative Patent Classification (CPC):
**B32B 27/08; B32B 27/36; C08J 5/18; C08L 67/02; C08L 67/04**

(86) International application number:
**PCT/KR2024/005612**

(87) International publication number:
**WO 2024/225777 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 KR 20230055679**

(71) Applicant: **SK microworks Co., Ltd.**
**Chungcheongbuk-do 27818 (KR)**

(72) Inventors:
• **OH, Mi Ok**
  Suwon-si, Gyeonggi-do 16336 (KR)
• **YEON, Jewon**
  Suwon-si, Gyeonggi-do 16336 (KR)
• **PARK, Sang Kuk**
  Suwon-si, Gyeonggi-do 16336 (KR)
• **HAN, Kweon Hyung**
  Suwon-si, Gyeonggi-do 16336 (KR)

(74) Representative: **Dehns**
**10 Old Bailey**
**London EC4M 7NG (GB)**

(54) **BIODEGRADABLE FILM AND BIODEGRADABLE MOLDED PRODUCT USING SAME**

(57) An embodiment pertains to a biodegradable film and a biodegradable molded product manufactured using same. The biodegradable film comprises a middle layer containing polybutylene succinate adipate (PBSA) resin, and a first and a second skin layer on the respective outermost sides, each containing polylactic acid (PLA) resin, whereby excellent biodegradability can be ensured while maintaining optical properties such as haze and light transmittance, and mechanical properties such as tensile strength and modulus.

[Fig. 1]

## Description

### Technical Field

Embodiments relate to a biodegradable film with excellent biodegradability, along with excellent optical characteristics and mechanical properties, and a biodegradable molded article manufactured using the biodegradable film.

### Background Art

Plastic films commonly used for packaging purposes include cellophane films, polyvinyl chloride (PVC) films, polyethylene (PE) films, polypropylene (PP) films, and nylon films.

However, cellophane films cause severe environmental pollution during the manufacturing process thereof; thus, their production is subject to a lot of regulations. PVC films generate harmful substances such as dioxin when incinerated; thus, their use is subject to a lot of regulations. In addition, PE films lack thermal resistance and mechanical properties; thus, their use is limited except for low-quality packaging purposes. In addition, PP films and nylon films have relatively stable molecular structures and good mechanical properties. However, when they are used for packaging purposes and then landfilled without special treatment, they are hardly decomposed due to their chemical and biological stability and accumulate in the soil, thereby shortening the lifespan of the landfill and causing the problem of soil contamination.

To make up for the shortcomings of these non-degradable plastic films, polylactic acid (PLA) films, which comprise polylactic acid (PLA) as an aliphatic polyester with high biodegradability of the resin itself, have been widely used in recent years. However, although PLA films have good mechanical properties such as strength and can be extruded and stretched, their use is limited due to the lack of flexibility due to the unique crystal structure. They also have a problem in that biodegradation is only possible under certain conditions such as high temperatures; and that they are hardly degraded in normal soil.

To improve this problem, Japanese Laid-open Patent Publication No. 2006-272712 discloses a method of preparing a film using a biodegradable aliphatic polyester alone other than polylactic acid. In such a case, not only is the glass transition temperature (Tg) so low that it is not easy to prepare a film using a biaxial stretching method, but also the mechanical strength of a final film is low, and the heat shrinkage rate is high, resulting in poor processability.

### Disclosure of Invention

### Technical Problem

The present inventors have conducted various studies to solve the above problems of the prior art. As a result, it has been discovered that when the composition, properties, thickness ratio, and/or laminated structure of the respective layers adopted in a biodegradable film are optimized, it is possible to obtain a biodegradable film with high biodegradability and low heat shrinkage while securing optical characteristics and mechanical properties.

Accordingly, an embodiment aims to provide a biodegradable film with high biodegradability and low heat shrinkage, without deterioration of optical characteristics such as haze and light transmittance and mechanical properties such as tensile strength and modulus.

In addition, another embodiment aims to provide a biodegradable molded article prepared using the biodegradable film.

### Solution to Problem

To solve the above problem, an embodiment provides a biodegradable film that comprises an intermediate layer; and a first skin layer and a second skin layer respectively provided on the outermost sides, wherein the intermediate layer comprises a polybutylene succinate adipate (PBSA) resin, and each of the first skin layer and the second skin layer comprises a polylactic acid (PLA) resin.

In addition, another embodiment provides a biodegradable molded article that comprises a biodegradable film comprising an intermediate layer; and a first skin layer and a second skin layer respectively provided on the outermost sides, wherein the intermediate layer comprises a polybutylene succinate adipate (PBSA) resin, and each of the first skin layer and the second skin layer comprises a polylactic acid (PLA) resin.

## Advantageous Effects of Invention

As the biodegradable film according to an embodiment comprises an intermediate layer comprising a polybutylene succinate adipate (PBSA) resin; and a first skin layer and a second skin layer respectively provided on the outermost sides and comprising a polylactic acid (PLA) resin, it has excellent biodegradability. Thus, it is not only faster in biodegradation speed than films made of a conventional PLA resin alone, but can also be biodegraded in normal soil at room temperature.

In addition, the biodegradable film has a relatively low heat shrinkage rate by virtue of enhanced stretchability while securing optical characteristics such as haze and light transmittance and mechanical properties such as tensile strength and modulus. Thus, it can have excellent processability.

Therefore, the biodegradable film according to an embodiment can be advantageously used in the manufacture of biodegradable molded articles such as environmentally friendly packaging materials with high quality.

## Brief Description of Drawings

Fig. 1 shows a cross-sectional view of a biodegradable film according to an embodiment.
Fig. 2 shows a cross-sectional view of a biodegradable film according to another embodiment.

## Best Mode for Carrying out the Invention

Hereinafter, the present invention will be described in detail with reference to embodiments. However, the embodiments are not limited to those described below. Rather, they can be modified into various forms as long as the gist of the invention is not altered.

Throughout the present specification, when a part is referred to as "comprising" an element, it may be understood that other elements may be comprised, rather than other elements are excluded, unless specifically stated otherwise.

Throughout the present specification, the terms first, second, and the like are used to describe various components. But the components should not be limited by the terms. The terms may be used only for the purpose of distinguishing one component from another.

All numbers expressing the physical properties, dimensions, and the like of elements used herein are to be understood as being modified by the term "about" unless otherwise indicated.

The production process of a polylactic acid (PLA) resin, widely used as a biodegradable resin, is environmentally friendly, and the biodegradability of products made using it is superior to products made using conventional polymer resins. However, a PLA resin has low transparency and does not have sufficient flexibility for processing; thus, there are limitations in manufacturing it into a film. Specifically, since a PLA resin has high crystallinity and low flexibility, it would tear during the stretching process, whereby it cannot be manufactured into a film. Even if it is manufactured into a film, the film would be bent, which makes its appearance poor, resulting in low processability and productivity. In addition, a PLA film prepared from a PLA resin is easily cracked or broken upon impact at temperatures of 20°C or lower, and it tends to become mushy at temperatures of 35°C or higher, making it unsuitable for manufacturing packaging films. In addition, although a PLA resin has better biodegradability than conventional non-degradable resins, commercialization has been difficult because conditions such as high temperatures are required for biodegradation.

Meanwhile, a polybutylene succinate adipate (PBSA) resin is an environmentally friendly material that degrades naturally when buried in normal soil. It has the advantage that it is fast in biodegradation speed and, unlike PLA resins, does not require conditions such as high temperatures for biodegradation. However, a PBSA resin has a low crystallization temperature, making it difficult to be processed through extrusion and stretching processes. Thus, there are limitations in manufacturing it into a molded article (e.g., films).

An embodiment provides a biodegradable film and a biodegradable molded article prepared using the same, in which a PLA resin and a PBSA resin are employed, while the composition, properties, thickness ratio, and/or laminated structure of the respective layers in which the resins are employed are optimized, whereby the advantages of the PLA resin and the PBSA resin are exhibited, and their disadvantages are overcome.

Specifically, as the biodegradable film according to an embodiment comprises an intermediate layer comprising a polybutylene succinate adipate (PBSA) resin; and a first skin layer and a second skin layer respectively provided on the outermost sides and comprising a polylactic acid (PLA) resin, it is possible to achieve excellent biodegradability, along with enhanced stretchability and mechanical properties. In particular, as the intermediate layer comprising the PBSA resin is positioned inside the biodegradable film, and the first and second skin layers comprising the PLA resin are positioned on the outside (specifically, the outermost) of the biodegradable film, respectively, the biodegradable film can exhibit enhanced stretchability and mechanical strength. Accordingly, the biodegradable film according to an embodiment of the present invention not only has a faster biodegradation speed than a conventional PLA film composed of a PLA resin alone, but can also be biodegraded in normal soil at room temperature and have excellent processability.

**Biodegradable film**

The biodegradable film according to an embodiment comprises an intermediate layer; and a first skin layer and a second skin layer respectively provided on the outermost sides, wherein the intermediate layer comprises a polybutylene succinate adipate (PBSA) resin, and each of the first skin layer and the second skin layer comprises a polylactic acid (PLA) resin, which will be described in detail by referring to the drawings as follows.

Intermediate layer (10)

According to an embodiment, the intermediate layer (10) may refer to a layer positioned between a first skin layer (20) and a second skin layer (30), each of which is the outermost layer of the biodegradable film. The position of the intermediate layer (10) may not be particularly limited. For example, the intermediate layer (10) may be positioned at the center of the biodegradable film, close to the first skin layer (20), or close to the second skin layer (30), based on the thickness direction of the biodegradable film. In addition, various functional layers (not shown) may, or may not, be present between the intermediate layer (10) and the first skin layer (20), or/and between the intermediate layer (10) and the second skin layer (30), as needed.

The intermediate layer (10) comprises a polybutylene succinate adipate (PBSA) resin.

According to an embodiment, the intermediate layer (10) may comprise the PBSA resin in an amount of 5% by weight to 100% by weight based on the total weight of the intermediate layer (10). Specifically, the content of the PBSA resin may be 35% by weight to 100% by weight, 50% by weight to 100% by weight, 70% by weight to 100% by weight, 80% by weight to 100% by weight, or 90% by weight to 100% by weight, based on the total weight of the intermediate layer (10), but it is not limited thereto. For example, the intermediate layer (10) may be composed of the PBSA resin alone. As the content of the PBSA resin contained in the intermediate layer (10) is within the above range, a biodegradable film with excellent biodegradability and processability can be provided.

According to an embodiment, the PBSA resin is a copolymer of polybutylene succinate (PBS) and polybutylene adipate (PBA). It may comprise a repeat unit derived from polybutylene succinate (PBS) and a repeat unit derived from polybutylene adipate (PBA). The molar ratio of the repeat unit derived from PBS and the repeat unit derived from PBA contained in the PBSA resin is not particularly limited, but it may be 50:50 to 90:10. Specifically, the molar ratio may be 60:40 to 85:15, 65:35 to 85:15, or 70:30 to 80:20, but it is not limited thereto. That is, the PBSA resin may comprise the repeat unit derived from PBS in an amount of 50 to 90% by mole, 60 to 85% by mole, 65 to 85% by mole, or 70 to 80% by mole, and the repeat unit derived from PBA in an amount of 10 to 50% by mole, 15 to 40% by mole, 15 to 35% by mole, or 20 to 30% by mole, based on the total number of moles of the repeat units contained in the PBSA resin. As the molar ratio is within the above range, a biodegradable film with desired properties can be provided.

According to an embodiment, the PBSA resin may have a melt viscosity of 5,500 poise to 10,000 poise at 210°C and a melt viscosity of 3,500 poise to 9,000 poise at 220°C, as measured by a rheometer (RDS). Specifically, the melt viscosity of the PBSA resin at 210°C may be 5,800 poise to 9.500 poise, 5,900 poise to 9,000 poise, 6,000 poise to 8,800 poise, 6,000 poise to 8,500 poise, or 7,500 poise to 8,400 poise; and the melt viscosity thereof at 220°C may be 4,000 poise to 9,000 poise, 4,500 poise to 9,000 poise, 4,800 poise to 8,500 poise, 5,000 poise to 8,000 poise, or 5,500 poise to 7,500 poise, as measured by a rheometer (RDS), but they are not limited thereto. The melt viscosity of the PBSA resin may be adjusted by controlling the molar ratio of the PBS-derived repeat unit and the PBA-derived repeat unit. As the melt viscosity of the PBSA resin is adjusted to the above range, the processability of the biodegradable film can be secured. In particular, as the melt viscosity of the PBSA resin is adjusted to a range similar, or equivalent, to the melt viscosity of the PLA resin, the processability of the mixture in which the PBSA resin and the PLA resin are mixed can be significantly enhanced when the mixture is extruded and stretched to manufacture a biodegradable film.

Meanwhile, according to an embodiment, the intermediate layer (10) may have a multilayer structure of three or more layers. Specifically, the intermediate layer (10) may have a structure in which three or more layers are laminated. At least one of the three or more layers may comprise a PBSA resin. More specifically, the intermediate layer (10) may have a multilayer structure in which layers comprising a PBSA resin and layers comprising a PLA resin are alternately laminated. As the intermediate layer (10) has a multilayer structure of three or more layers, a biodegradable film with more excellent stretchability and mechanical properties can be provided.

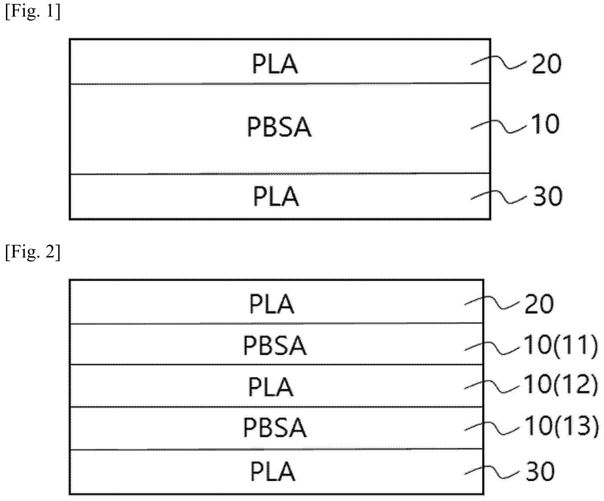

For example, referring to Fig. 2, the intermediate layer (10) may have a structure in which a first layer (11) comprising a PBSA resin, a second layer (12) comprising a PLA resin, and a third layer (13) comprising a PBSA resin are sequentially laminated. The description of the PBSA resin contained in each of the first layer (11) and the third layer (13) is the same as described above, and the description of the PLA resin contained in the second layer (12) is the same as described below; thus, a description thereof is omitted.

First skin layer (20)

According to an embodiment, the first skin layer (20) may refer to a layer corresponding to the outermost layer of the biodegradable film.

The first skin layer (20) comprises a polylactic acid (PLA) resin. Since the PLA resin, unlike petroleum-based resins, is based on biomass, renewable resources can be used. It emits less carbon dioxide, the main cause of global warming, during its production as compared with petroleum-based resins and is environmentally friendly as it is biodegraded by moisture and microorganisms when landfilled.

According to an embodiment, the first skin layer (20) may comprise the PLA resin in an amount of 50% by weight to 100% by weight based on the total weight of the first skin layer (20). Specifically, the content of the PLA resin may be 55% by weight to 100% by weight, 60% by weight to 100% by weight, 70% by weight to 100% by weight, 80% by weight to 100% by weight, or 90% by weight to 100% by weight, based on the total weight of the first skin layer (20), but it is not limited thereto. For example, the first skin layer (20) may be composed of the PLA resin alone. As the content of the PLA resin contained in the first skin layer (20) is within the above range, a biodegradable film with excellent biodegradability and mechanical properties can be provided.

According to an embodiment, the PLA resin is a random copolymer of L-lactic acid and D-lactic acid, and it may comprise a repeat unit derived from L-lactic acid, a repeat unit derived from D-lactic acid, a repeat unit derived from D,L-lactic acid, or a combination thereof.

The PLA resin may comprise the L-lactic acid-derived repeat unit in an amount of 80% by mole or more based on the total number of moles of the repeat units contained in the PLA resin. Specifically, the content of the L-lactic acid-derived repeat unit may be 83% by mole or more, 85% by mole or more, 90% by mole or more, 93% by mole or more, 95% by mole or more, 98% by mole or more, or 99% by mole or more (e.g., 80% by mole to 99.5% by mole, 83% by mole to 99% by mole, 85% by mole to 99% by mole, 90% by mole to 99% by mole, or 95% by mole to 99% by mole), based on the total number of moles of the repeat units contained in the PLA resin, but it is not limited thereto. As the content of the L-lactic acid-derived repeat unit is within the above range, the thermal resistance of the biodegradable film can be enhanced.

In addition, the PLA resin may comprise the D-lactic acid-derived repeat unit in an amount of 1% by mole or more based on the total number of moles of the repeat units contained in the PLA resin. Specifically, the content of the D-lactic acid-derived repeat unit may be 1% by mole to 5% by mole, 1% by mole to 4% by mole, 2% by mole to 4% by mole, 1% by mole to 2% by mole, or 2% by mole to 3% by mole, based on the total number of moles of the repeat units contained in the PLA resin, but it is not limited thereto. As the content of the D-lactic acid-derived repeat unit is within the above range, the stretchability can be enhanced when the biodegradable film is prepared.

According to an embodiment, the PLA resin may have a melt viscosity of 3,000 poise to 14,000 poise at 210°C and a melt viscosity of 2,000 poise to 12,000 poise at 220°C, as measured by a rheometer (RDS). Specifically, the melt viscosity of the PLA resin at 210°C may be 4,000 poise to 13,000 poise, 5,000 poise to 12,000 poise, 6,000 poise to 11,000 poise, 7,000 poise to 10,000 poise, or 7,500 poise to 9,500 poise; and the melt viscosity thereof at 220°C may be 2,000 poise to 10,000 poise, 3,000 poise to 9,000 poise, 3,500 poise to 8,500 poise, 4,000 poise to 8,000 poise, 5,000 poise to 8,000 poise, or 4,500 poise to 7,500 poise, as measured by a rheometer (RDS), but they are not limited thereto. As the melt viscosity of the PLA resin is adjusted to the above range, the processability of the biodegradable film can be secured.

The PLA resin may have a weight average molecular weight (Mw) of 100,000 g/mole to 1,000,000 g/mole. Specifically, the weight average molecular weight of the PLA resin may be 100,000 g/mole to 800,000 g/mole, 120,000 g/mole to 500,000 g/mole, or 150,000 g/mole to 300,000 g/mole, but it is not limited thereto. As the weight average molecular weight of the PLA resin is within the above range, the mechanical properties and thermal resistance of the biodegradable film can be enhanced.

In addition, the PLA resin may have a glass transition temperature (Tg) of 30°C to 80°C and a melting temperature (Tm) of 100°C to 250°C, as measured by differential scanning calorimetry (DSC). Specifically, the glass transition temperature (Tg) of the PLA resin may be 35°C to 80°C, 35°C to 75°C, 40°C to 70°C, or 45°C to 65°C, and the melting temperature (Tm) of the PLA resin may be 105°C to 250°C, 110°C to 235°C, 120°C to 200°C, or 145°C to 185°C, but they are not limited thereto.

The differential scanning calorimeter (DSC) may be Q2000 from TA Instruments. The DSC measurements are performed in a nitrogen ($N_2$) atmosphere.

Specifically, the glass transition temperature (Tg), melting temperature (Tm), and crystallization temperature (Tc) of the PLA resin may be measured from a heat flow curve obtained by performing a first scan (1st scan), followed by a second scan (2nd scan), in a differential scanning calorimeter (DSC) mode. For example, the heat flow curve may be obtained by heating from 40°C to 180°C at a rate of 10°C/minute, cooling to -50°C at a rate of 10°C/minute, and then heating from -50°C to 180°C at a rate of 10°C/minute. During the second scan procedure, Tg, Tc, and Tm are measured. In such an event, the heat of crystallization may be calculated from the integral at the crystallization temperature (Tc).

Meanwhile, the PLA resin may have a melt flow index (MI, 190°C and 2.13 kg) of 2 g/10 minutes to 5 g/10 minutes according to ISO 1133 and ASTM D1238. Specifically, the melt flow index (MI, 190°C and 2.13 kg) of the PLA resin may be 2.1 g/10 minutes to 4.8 g/10 minutes, 2.3 g/10 minutes to 4.5 g/10 minutes, 2.5 g/10 minutes to 4.2 g/10 minutes, or 2.6 g/10 minutes to 4 g/10 minutes, but it is not limited thereto.

According to an embodiment, the first skin layer (20) may further comprise at least one resin selected from the group consisting of a polybutylene succinate adipate (PBSA) resin and a polyhydroxyalkanoate (PHA) resin. Specifically, the first skin layer (20) may comprise the PLA resin and the PBSA resin, or it may comprise the PLA resin and the PHA resin.

Since the description of the PBSA resin further contained in the first skin layer (20) is the same as described above, a description thereof is omitted.

The PHA resin further contained in the first skin layer (20) may be a random copolymer (e.g., poly(3HB-co-4HB)) comprising a repeat unit derived from 4-hydroxybutyrate (4HB) and a repeat unit derived from 3-hydroxybutyrate (3HB). It may be a PHA resin (aPHA) that has amorphous characteristics as its crystallinity is controlled depending on the content of a 4HB-derived repeat unit.

According to an embodiment, the PHA resin may comprise the 4HB-derived repeat unit in an amount of 15% by mole to 60% by mole based on the total number of moles of the repeat units contained in the PHA resin. Specifically, the content of the 4HB-derived repeat unit contained in the PHA resin may be 20% by mole to 55% by mole, 25% by mole to 50% by mole, 28% by mole to 45% by mole, or 30% by mole to 40% by mole, based on the total number of moles of the repeat units contained in the PHA resin, but it is not limited thereto. As the content of the 4HB-derived repeat unit is within the above range, the stretchability and flexibility required in the stretching process can be further enhanced. In addition, when the first skin layer (20) further comprises the PHA resin having the 4HB-derived repeat unit within the above range, compatibility with the PLA resin is further enhanced, whereby it is possible to provide a biodegradable film with excellent optical properties.

The PHA resin may comprise the 3HB-derived repeat unit in an amount of 20% by mole or more, 25% by mole or more, 35% by mole or more, 50% by mole or more, 60% by mole or more, or 75% by mole or more, based on the total number of moles of the repeat units contained in the PHA resin.

The PHA resin may have a glass transition temperature (Tg) of -25°C to 0°C as measured by differential scanning calorimetry (DSC). Specifically, the glass transition temperature (Tg) of the PHA resin may be -20°C to -1°C, -15°C to -2°C, or -20°C to -10°C, but it is not limited thereto.

The PHA resin may have a melt flow index (MI, 190°C and 2.16 kg) of 5 g/10 minutes or less according to ISO 1133 and ASTM D1238. Specifically, the melt flow index (MI, 190°C and 2.13 kg) of the PHA resin may be 3.5 g/10 minutes or less, 3 g/10 minutes or less, or 2 g/10 minutes or less, but it is not limited thereto.

When the first skin layer (20) further comprises at least one of the PBSA resin and the PHA resin, the content of the PLA resin may be 20% by weight or more based on the total weight of the first skin layer (20). Specifically, the content of the PLA resin may be 30% by weight or more, 40% by weight or more, or 45% by weight or more, and the content of at least one resin among the PBSA resin and the PHA resin may be 80% by weight or less, 70% by weight or less, 60% by weight or less, or 55% by weight or less, based on the total weight of the first skin layer (20).

Second skin layer (30)

According to an embodiment, the second skin layer (30) may refer to a layer corresponding to the outermost layer of the biodegradable film, similar to the first skin layer (20).

The second skin layer (30) comprises a polylactic acid (PLA) resin. In addition, the second skin layer (30) may further comprise at least one resin selected from the group consisting of a polybutylene succinate adipate (PBSA) resin and a polyhydroxyalkanoate (PHA) resin. Specifically, the second skin layer (30) may comprise the PLA resin and the PBSA resin, or it may comprise the PLA resin and the PHA resin.

The description of the second skin layer (30) is the same as the description of the first skin layer (20) above; thus, a description thereof is omitted.

According to an embodiment, the thickness ratio of the first skin layer (20):the intermediate layer (10):the second skin layer (30) may be 1:2 to 10:1. Specifically, the thickness ratio of the first skin layer (20):the intermediate layer (10):the second skin layer (30) may be 1:2 to 9:1, 1:2 to 8:1, 1:2.5 to 6:1, 1:3 to 5:1, but it is not limited thereto. As the thickness ratio is within the above range, a biodegradable film with excellent optical characteristics and mechanical properties can be provided.

According to an embodiment, at least one of the intermediate layer (10), the first skin layer (20), and the second skin layer (30) may further comprise at least one additive selected from the group consisting of thickeners, slip agents, electrostatic agents, antistatic agents, antioxidants, thermal stabilizers, ultraviolet ray blockers, anti-blocking agents, impact-resistant reinforcing agents, and inorganic lubricants.

The thickener may comprise at least one selected from the group consisting of aromatic diisocyanates, aliphatic diisocyanates, isocyanurates, bisoxazolines, carboxylic acid anhydrides, and epoxides. For example, ADR-4468 may be used as the thickener, but it is not limited thereto.

The slip agent may comprise at least one selected from the group consisting of erucamide, oleamide, and stearamide.

The antioxidant may be a phosphorus-based antioxidant, a phenol-based antioxidant, or a pentaerythritol-based antioxidant. For example, Irganox 1010 or Irgafos 168 may be used as the antioxidant, but it is not limited thereto.

The content of the additives may be appropriately adjusted depending on the properties of the biodegradable film. Specifically, the intermediate layer (10), the first skin layer (20), or the second skin layer (30) may comprise each additive in an amount of 0.1% by weight to 20% by weight, 0.5% by weight to 18% by weight, 1% by weight to 15% by weight, or 3% by weight to 13% by weight, based on the total weight of each layer.

According to an embodiment, the biodegradable film comprising the intermediate layer (10), the first skin layer (20), and the second skin layer (30) may have a haze of 20% or less. Specifically, the haze of the biodegradable film may be 19% or less, 18% or less, 15% or less, 13% or less, 11% or less, or 10% or less, but it is not limited thereto.

The biodegradable film may have a light transmittance of 90% or more at 380 nm. Specifically, the light transmittance of the biodegradable film may be 91% or more, 92% or more, 93% or more, or 94% or more, but it is not limited thereto.

The biodegradable film may have a heat shrinkage rate (specifically, a heat shrinkage rate in each of the MD direction and the TD direction) of 0.1% to 10% when thermally treated at a temperature of 100°C for 5 minutes. Specifically, the heat shrinkage rate of the biodegradable film may be 0.5% to 8%, 1% to 6%, 1.5% to 4%, or 1.5% to 3%, but it is not limited thereto.

The biodegradable film may have a tensile strength (specifically, a tensile strength in each of the MD direction and the TD direction) of 1 kgf/mm$^2$ to 25 kgf/mm$^2$ according to ASTM D882. Specifically, the tensile strength of the biodegradable film may be 1.5 kgf/mm$^2$ to 20 kgf/mm$^2$, 2 kgf/mm$^2$ to 15 kgf/mm$^2$, 2.5 kgf/mm$^2$ to 10 kgf/mm$^2$, or 3 kgf/mm$^2$ to 7 kgf/mm$^2$, but it is not limited thereto.

The biodegradable film may have a modulus (specifically, a modulus in each of the MD direction and the TD direction) of 50 kgf/mm$^2$ to 300 kgf/mm$^2$ according to KS B5521. Specifically, the modulus of the biodegradable film may be 55 kgf/mm$^2$ to 250 kgf/mm$^2$, 60 kgf/mm$^2$ to 230 kgf/mm$^2$, 80 kgf/mm$^2$ to 200 kgf/mm$^2$, or 100 kgf/mm$^2$ to 200 kgf/mm$^2$, but it is not limited thereto.

The biodegradable film may have an elongation of 30% to 300%. Specifically, the elongation of the biodegradable film may be 35% to 250%, 40% to 200%, 50% to 180%, or 55% to 160%, but it is not limited thereto.

The biodegradable film may have a biodegradability of 80% or more according to ASTM D5338. Specifically, the biodegradability of the biodegradable film may be 81% or more, 82% or more, 85% or more, 90% or more, or 95% or more, but it is not limited thereto.

According to an embodiment, the biodegradable film may have a melting temperature (Tm) of 0°C to 200°C as measured by differential scanning calorimetry (DSC). Specifically, the melting temperature (Tm) of the biodegradable film may be 10°C to 190°C, 20°C to 185°C, 30°C to 180°C, 35°C to 175°C, or 50°C to 180°C (e.g., 75°C to 85°C or 155 to 165°C), but it is not limited thereto.

The biodegradable film may have a thickness of 5 μm to 200 μm. Specifically, the thickness of the biodegradable film may be 5 μm to 180 μm, 5 μm to 160 μm, 10 μm to 150 μm, or 15 μm to 130 μm, but it is not limited thereto.

**Process for preparing a biodegradable film**

The process for preparing a biodegradable film according to an embodiment comprises feeding a polybutylene succinate adipate (PBSA) resin and a polylactic acid (PLA) resin to an extruder and melt coextruding them to prepare a sheet; and stretching the sheet.

Since the description of the PBSA resin and the PLA resin is the same as described above, a description thereof is omitted.

According to an embodiment, the process for preparing a biodegradable film efficiently combines materials having various functions to prepare a biodegradable film having various laminated structures according to the purposes. In particular, when the coextrusion method is adopted, a multilayer film having various functional layers can be efficiently prepared by extruding a single material or different materials at once, whereby processability and productivity can be more excellent.

The melt coextrusion may be carried out at a temperature of 120°C to 250°C, 125°C to 240°C, 130°C to 230°C, 135°C to 220°C, or 140°C to 215°C.

After the melt coextrusion, stretching, thermal treatment (heat setting), and/or drying may be further carried out. The process conditions for these steps may be appropriately set within a range that does not impair the effect desired in the embodiment.

The stretching of the sheet may be carried out by first stretching and second stretching. Specifically, the stretching may be carried out by first stretching the sheet in a first direction and then second stretching it in a second direction perpendicular to the first direction.

The first direction may be the transverse direction (TD) or the longitudinal direction (MD). Specifically, the first direction may be the longitudinal direction (MD), and the second direction perpendicular to the first direction may be the transverse direction (TD).

The first stretching may be carried out at a temperature of 60°C to 120°C at a stretching ratio of 2 times to 4 times. Specifically, the first stretching may be carried out at a temperature of 70°C to 110°C, 75°C to 105°C, or 80°C to 100°C, at a stretching ratio of 2.2 times to 4 times, 2.5 times to 3.8 times, 2.5 times to 3.5 times, or 2.8 times to 3.4 times. As the temperature and the stretching ratio of the first stretching satisfy the above ranges, it is possible to enhance stretchability.

The second stretching may be carried out at a temperature of 70°C to 140°C at a stretching ratio of 3 times to 5 times. Specifically, the second stretching may be carried out at a temperature of 70°C to 135°C, 72°C to 110°C, or 75°C to 100°C, at a stretching ratio of 3.1 times to 5 times, 3.2 times to 4.9 times, 3.3 times to 4.8 times, or 3.8 times to 4.8 times. As the temperature and the stretching ratio of the second stretching satisfy the above ranges, it is possible to enhance stretchability.

The ratio ($d2/d1$) of the stretching ratio in the second direction ($d2$) to the stretching ratio in the first direction ($d1$) may be 0.2 to 2.5. Specifically, the ratio ($d2/d1$) of the stretching ratio in the second direction ($d2$) to the stretching ratio in the first direction ($d1$) may be 0.3 to 2.2, 0.4 to 2, 0.5 to 1.9, 1 to 1.8, or 1.3 to 1.7, but it is not limited thereto.

Meanwhile, a preheating step or a coating step may be further carried out before the second stretching.

The preheating may be carried out at a temperature of 70°C to 120°C for 0.01 minute to 1 minute. Specifically, the preheating may be carried out at a temperature of 70°C to 120°C, 75°C to 115°C, or 80°C to 100°C, for 0.01 minute to 1 minute, 0.05 minute to 0.5 minute, or 0.08 minute to 0.2 minute.

The coating may be a step of imparting functionality, such as antistatic properties, to the biodegradable film and carried out by spin coating or in-line coating, but it is not limited thereto.

Thereafter, the stretched sheet may be heat-set at 110°C to 160°C to prepare a biodegradable film. Specifically, the heat setting may be annealing and may be carried out at 125°C to 160°C, 130°C to 158°C, or 145°C to 155°C, for 1 second to 5 minutes or 1 second to 3 minutes. Upon completion of the heat setting, a procedure of gradually lowering the temperature may be carried out.

**Biodegradable molded article**

The biodegradable molded article according to an embodiment comprises a biodegradable film comprising an intermediate layer; and a first skin layer and a second skin layer respectively provided on the outermost sides. Here, the intermediate layer comprises a polybutylene succinate adipate (PBSA) resin, and each of the first skin layer and the second skin layer comprises a polylactic acid (PLA) resin. Since the description of the biodegradable film contained in the biodegradable molded article is the same as described above, a description thereof is omitted.

The biodegradable molded article may be an environmentally friendly packaging material. Specifically, the environmentally friendly packaging material may be in the form of a film and may comprise an air cap.

The environmentally friendly packaging material may be a disposable packaging material or a food packaging material. Specifically, the environmentally friendly packaging material can be used in a variety of ways, such as pet food packaging, seaweed packaging, nut packaging, dried food packaging, mask pack packaging, feed packaging, and coffee pouches.

The environmentally friendly packaging material may be prepared by processing the biodegradable film into a desired shape to suit the desired use. The processing may be carried out through commonly known methods, such as extrusion molding, injection molding, compression molding, pressure molding, blowing or blow molding (e.g., blown film, blowing of foam), calendering, rotomolding, casting (e.g., cast sheet, cast film), or thermoforming.

Since the environmentally friendly packaging material comprises the biodegradable film described above, it has excellent biodegradation even when buried in normal soil, whereby it has a very low risk of environmental pollution even when used in large quantities as compared with conventional packaging materials. It can also have excellent optical characteristics, mechanical properties, and flexibility. Accordingly, the embodiment can provide environmentally friendly packaging materials with high quality.

**Mode for the Invention**

Hereinafter, the present embodiment will be described in more detail with reference to embodiments. However, these examples are provided only for illustration purposes, and the present embodiment is not limited thereto.

**[Example]**

**Example 1: Preparation of a biodegradable film**

A polybutylene succinate adipate (PBSA) resin and a polylactic acid (PLA) resin having the following characteristics were prepared, respectively. In such an event, the PBSA resin was in the form of a chip.

Next, the PLA resin, the PBSA resin, and the PLA resin were sequentially fed to extruders A to C of a T-die triple coextrusion laminator, respectively, and melt coextruded (triple extrusion) at 220°C to prepare a sheet.

Thereafter, it was subjected to first stretching at a stretching ratio of 3 times in the MD direction and second stretching at a stretching ratio of 4.8 times in the TD direction, followed by heat setting at 140°C, to prepare a biodegradable film. The biodegradable film had a structure of three layers of A/B/C: first skin layer (100% by weight of the PLA resin); intermediate layer (100% by weight of the PBSA resin); and second skin layer (100% by weight of the PLA resin). The thickness ratio of each layer was 2:6:2, and the total thickness was 20 μm.

* PBSA resin

Copolymer of polybutylene succinate (PBS) and polybutylene adipate (PBA) (with a content of a PBS-derived repeat unit: 74% by mole and a content of a PBA-derived repeat unit: 26% by mole)
Melt viscosity at 210°C measured by a rheometer (RDS): 7,060 poise
Melt viscosity at 220°C measured by a rheometer (RDS): 6,855 poise

* PLA resin

Random copolymer of L-lactic acid and D-lactic acid (with a content of an L-lactic acid-derived repeat unit: 98% by mole)
Weight average molecular weight: 190,000 g/mole
Glass transition temperature (Tg): 58°C
Melting temperature (Tm): 163.9°C
Melt viscosity at 210°C measured by a rheometer (RDS): 8,295 poise
Melt viscosity at 220°C measured by a rheometer (RDS): 6,306 poise
Melt flow index (MI, 190°C and 2.16 kg) according to ISO 1133 and ASTM D1238: 3.5 g/10 minutes

**Examples 2 to 9: Preparation of a biodegradable film**

Biodegradable films were each prepared in the same manner as in Example 1, except that the composition for each layer and process conditions were adjusted as shown in Table 1 below.

**[Comparative Example]**

**Comparative Example 1: Preparation of a biodegradable**

A biodegradable film (structure of first skin layer (100% by weight of the PLA resin); intermediate layer (100% by weight of the PLA resin); and second skin layer (100% by weight of the PLA resin)) was prepared in the same manner as in Example 1, except that the PLA resin of Example 1 was sequentially fed to extruders A to C of the T-die triple coextrusion laminator.

**[Test Example]**

**Test Example 1: Haze**

The biodegradable films prepared in Examples 1 to 9 and Comparative Example 1 were each measured for the haze using a haze meter (SEP-H, manufactured by Nihon Semitsu Kogaku).

**Test Example 2: Light transmittance**

The biodegradable films prepared in Examples 1 to 9 and Comparative Example 1 were each measured for the light transmittance at 380 nm using UltraScan PRO (manufacturer: Hunterlab).

**Test Example 3: Heat shrinkage rate**

The biodegradable films of Examples 1 to 9 and Comparative Example 1 were each cut into 300 mm in the direction to be measured and 15 mm in the direction perpendicular thereto to prepare a sample. Here, 300 mm was the first dimension (x1) before shrinkage, and 15 mm was the second dimension.

The cut biodegradable film was immersed in a water bath heated at 100°C for 5 minutes, and the shrunk dimension of the biodegradable film after shrinkage, that is, the first dimension after shrinkage (x2), was measured. Heat shrinkage rate was calculated according to the following equation.

$$\text{Heat shrinkage rate (\%)} = \{(x1 - x2) \, / \, x1\} \times 100$$

**Test Example 4: Tensile strength**

The biodegradable films of Examples 1 to 9 and Comparative Example 1 were each cut to 150 mm in length and 100 mm in width to prepare a sample. According to ASTM D882, the tensile strength of the same sample was measured three times at room temperature at a test speed of 200 mm/minute with a universal testing machine (4206-001) of INSTRON, and the average value was calculated.

**Test Example 5: Elongation**

The biodegradable films of Examples 1 to 9 and Comparative Example 1 were each cut to 100 mm in length and 15 mm in width to prepare a sample. The maximum deformation of the sample immediately before fracture was measured at a rate of 500 mm/min with a universal testing machine (4206-001) of INSTRON. Elongation was calculated as the ratio of the maximum deformation to the initial length.

**Test Example 6: Modulus**

The biodegradable films of Examples 1 to 9 and Comparative Example 1 were each measured for the modulus in accordance with KS B5521.

**Test Example 7: Thickness deviation**

The biodegradable films of Examples 1 to 9 and Comparative Example 1 were each measured for the thickness at 10-cm intervals using Mitutoyo 547-401, and the deviation was calculated.

[Table 1]

| | | Ex. 1 | Ex. 2 | Ex. 3 | Ex. 4 | Ex. 5 | Ex. 6 | Ex. 7 | Ex. 8 | Ex. 9 | C. Ex. 1 |
|---|---|---|---|---|---|---|---|---|---|---|---|
| Layer A | | PLA (100) | PLA (100) | PLA (100) | PLA (100) | PLA (100) | PLA (100) | PLA (100) | PLA (100) | PLA (100) | PLA (100) |
| Layer B | | PBSA (100) | PBSA (100) | PBSA (100) | PBSA (100) | PBSA (100) | PBSA (100) | PBSA (100) | PBSA (100) | PBSA (100) | PLA (100) |
| Layer C | | PLA (100) | PLA (100) | PLA (100) | PLA (100) | PLA (100) | PLA (100) | PLA (100) | PLA (100) | PLA (100) | PLA (100) |
| Thickness ratio of A/B/C | | 2:6:2 | 2:6:2 | 2:6:2 | 2:6:2 | 2:6:2 | 1:8:1 | 1.5:7:1.5 | 1.5:7:1.5 | 1.5:7:1.5 | 2:6:2 |
| Stretching ratio | MD (times) | 2.8 | 3.3 | 3.2 | 3.1 | 3.0 | 3.0 | 3.0 | 3.1 | 3.2 | 3.2 |
| | TD (times) | 4.8 | 4.8 | 4.8 | 4.8 | 4.8 | 4.8 | 4.8 | 4.8 | 4.8 | 4.0 |
| Total thickness (μm) | | 20 | 20 | 20 | 20 | 20 | 20 | 20 | 20 | 20 | 20 |
| Thickness deviation | | 3.00 | 5.63 | 4.09 | 2.78 | 3.06 | 5.11 | 3.50 | 9.28 | 4.97 | 6.22 |
| Haze (%) | | 10.2 | 16.4 | 18.9 | 10.1 | 9.62 | 10.6 | 10.3 | 11.9 | 13.1 | 4.3 |
| Light transmittance (%) | | 94.3 | 91.7 | 91.2 | 94.0 | 94.3 | 94.4 | 94.3 | 93.8 | 93.6 | 97.2 |
| Heat shrinkage rate (%) | MD | 1.5 | 1.8 | 1.5 | 1.5 | 2.0 | 2.5 | 2.5 | 2.5 | 2.5 | 3.7 |
| | TD | 2.5 | 3.0 | 2.75 | 2.5 | 3.0 | 3.5 | 3.0 | 2.5 | 3.5 | 2.9 |
| Tensile strength (kgf/mm$^2$) | MD | 5.7 | 5.3 | 5.9 | 4.8 | 6.5 | 4.1 | 4.6 | 5.7 | 3.1 | 14.2 |
| | TD | 8.5 | 8.7 | 6.4 | 5.8 | 6.7 | 3.6 | 4.6 | 5.8 | 4.8 | 15.0 |
| Elongation (%) | MD | 152 | 125 | 141 | 126 | 157 | 148 | 121 | 143 | 97 | 103 |
| | TD | 77 | 63 | 65 | 57 | 71 | 59 | 56 | 67 | 60 | 47 |
| Modulus (kgf/mm$^2$) | MD | 138.2 | 117.4 | 136.7 | 122.3 | 144.6 | 88.5 | 114.2 | 122.5 | 69.8 | 329.6 |
| | TD | 171.7 | 179.2 | 162.9 | 164.3 | 197.2 | 102.6 | 146.6 | 156.9 | 116.5 | 466.8 |

As can be seen from Table 1 above, the biodegradable films of Examples 1 to 9 comprising an intermediate layer comprising a PBSA resin and first and second skin layers each comprising a PLA resin on the outermost sides thereof had excellent properties in terms of haze, light transmittance, heat shrinkage rate, tensile strength, elongation, and modulus.

Specifically, referring to the tensile strength and haze of the biodegradable films of Examples 5 to 7, it is confirmed that the values of the tensile strength and haze vary depending on the thickness ratio of the first and second skin layers and the intermediate layer of the biodegradable film. Example 5, in which the thickness ratio of the first skin layer:intermediate layer:second skin layer was 2:6:2, was the most preferable in terms of tensile strength and haze.

In addition, referring to the tensile strength and haze of the biodegradable films of Examples 2 to 5, it is confirmed that the values of the tensile strength and haze vary depending on the stretching ratio of the biodegradable film. Example 5, in which the stretching ratio in the MD direction was 3.0 times, was the most preferable in terms of tensile strength and haze.

## Claims

1. A biodegradable film, which comprises an intermediate layer; and a first skin layer and a second skin layer respectively provided on the outermost sides, wherein the intermediate layer comprises a polybutylene succinate adipate (PBSA) resin, and each of the first skin layer and the second skin layer comprises a polylactic acid (PLA) resin.

2. The biodegradable film of claim 1, wherein the intermediate layer comprises the PBSA resin in an amount of 5% by weight to 100% by weight based on the total weight of the intermediate layer.

3. The biodegradable film of claim 1, wherein the PBSA resin comprises a repeat unit derived from polybutylene succinate (PBS) and a repeat unit derived from polybutylene adipate (PBA), and the molar ratio of the repeat unit derived from the PBS and the repeat unit derived from the PBA is 50:50 to 90:10.

4. The biodegradable film of claim 1, wherein the PBSA resin has a melt viscosity of 5,500 poise to 10,000 poise at 210°C and a melt viscosity of 3,500 poise to 9,000 poise at 220°C, as measured by a rheometer (RDS).

5. The biodegradable film of claim 1, wherein the PLA resin has a melt viscosity of 7,000 poise to 10,000 poise at 210°C and a melt viscosity of 5,000 poise to 8,000 poise at 220°C, as measured by a rheometer (RDS).

6. The biodegradable film of claim 1, wherein the intermediate layer has a multilayer structure of three or more layers.

7. The biodegradable film of claim 6, wherein the intermediate layer has a structure in which a first layer comprising a polybutylene succinate adipate (PBSA) resin, a second layer comprising a polylactic acid (PLA) resin, and a third layer comprising a polybutylene succinate adipate (PBSA) resin are sequentially laminated.

8. The biodegradable film of claim 1, wherein the PLA resin is a random copolymer of L-lactic acid and D-lactic acid, comprising a repeat unit derived from L-lactic acid in an amount of 80% by mole or more based on the total number of moles of the repeat units contained in the PLA resin; and
it has a weight average molecular weight (Mw) of 100,000 g/mole to 1,000,000 g/mole, a glass transition temperature (Tg) of 30°C to 80°C and a melting temperature (Tm) of 100°C to 250°C, as measured by differential scanning calorimetry (DSC), and a melt flow index (MI, 190°C and 2.13 kg) of 2 g/10 minute to 5 g/10 minute according to ISO 1133 and ASTM D1238.

9. The biodegradable film of claim 1, wherein the first skin layer and the second skin layer each further comprise at least one resin selected from the group consisting of a polybutylene succinate adipate (PBSA) resin and a polyhydroxyalkanoate (PHA) resin.

10. The biodegradable film of claim 9, wherein the PHA resin comprises a repeat unit derived from 4-hydroxybutyrate (4HB) in an amount of 15% by mole to 60% by mole based on the total number of moles of the repeat units contained in the PHA resin.

11. The biodegradable film of claim 10, wherein the PHA resin has a glass transition temperature (Tg) of -25°C to 0°C as measured by differential scanning calorimetry (DSC) and a melt flow index (MI, 190°C and 2.16 kg) of 5 g/10 minute or less according to ISO 1133 and ASTM D1238.

12. The biodegradable film of claim 1, wherein the thickness ratio of the first skin layer:the intermediate layer:the second skin layer is 1:2 to 10:1.

13. The biodegradable film of claim 1, wherein at least one of the intermediate layer, the first skin layer, and the second skin layer further comprises at least one additive selected from the group consisting of thickeners, slip agents, electrostatic agents, antistatic agents, antioxidants, thermal stabilizers, ultraviolet ray blockers, anti-blocking agents, impact-resistant reinforcing agents, and inorganic lubricants.

14. The biodegradable film of claim 1, which has:

    a haze is 20% or less,
    a light transmittance of 90% or more at 380 nm,
    a heat shrinkage rate of 0.1% to 10% upon thermal treatment at a temperature of 100°C for 5 minutes,
    a tensile strength of 1 kgf/mm$^2$ to 25 kgf/mm$^2$ according to ASTM D882,
    a modulus of 50 kgf/mm$^2$ to 300 kgf/mm$^2$ according to KS B5521,
    an elongation of 30% to 300%, and
    a biodegradability of 80% or more.

15. The biodegradable film of claim 1, which has a melting temperature (Tm) of 50°C to 180°C as measured by differential scanning calorimetry (DSC).

16. A biodegradable molded article, which comprises a biodegradable film comprising an intermediate layer; and a first skin layer and a second skin layer respectively provided on the outermost sides, wherein the intermediate layer comprises a polybutylene succinate adipate (PBSA) resin, and each of the first skin layer and the second skin layer comprises a polylactic acid (PLA) resin.

[Fig. 1]

| | |
|---|---|
| PLA | ~20 |
| PBSA | ~10 |
| PLA | ~30 |

[Fig. 2]

| | |
|---|---|
| PLA | ~20 |
| PBSA | ~10(11) |
| PLA | ~10(12) |
| PBSA | ~10(13) |
| PLA | ~30 |

## INTERNATIONAL SEARCH REPORT

| International application No. |
| --- |
| **PCT/KR2024/005612** |

### A. CLASSIFICATION OF SUBJECT MATTER

**B32B 27/08**(2006.01)i; **B32B 27/36**(2006.01)i; **C08J 5/18**(2006.01)i; **C08L 67/04**(2006.01)i; **C08L 67/02**(2006.01)i

According to International Patent Classification (IPC) or to both national classification and IPC

### B. FIELDS SEARCHED

Minimum documentation searched (classification system followed by classification symbols)

B32B 27/08(2006.01); A01G 13/00(2006.01); B32B 27/36(2006.01); B65D 30/02(2006.01); B65D 65/46(2006.01); C08J 3/24(2006.01); C08J 5/18(2006.01); C08K 3/34(2006.01); C08L 101/00(2006.01); C08L 67/00(2006.01); C08L 67/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 스킨층(skin layer), 중간층(middle layer), 폴리락트산(polylactic acid, PLA), 폴리부틸렌숙시네이트아디페이트(polybutylene succinate adipate, PBSA), 생분해성 필름(biodegradable film)

### C. DOCUMENTS CONSIDERED TO BE RELEVANT

| Category* | Citation of document, with indication, where appropriate, of the relevant passages | Relevant to claim No. |
| --- | --- | --- |
| X | JP 2006-198931 A (DAINIPPON INK & CHEM. INC.) 03 August 2006 (2006-08-03)<br>See abstract; paragraphs [0001]-[0029]; and example 1. | 1-8,12-16 |
| Y | | 9-11 |
| Y | WO 2013-184822 A1 (METABOLIX, INC.) 12 December 2013 (2013-12-12)<br>See claims 1, 3 and 85. | 9-11 |
| X | KR 10-2014-0116868 A (TIPA CORP. LTD.) 06 October 2014 (2014-10-06)<br>See paragraphs [0025]-[0142]; and claims 15-16. | 1,2,6,9,13,16 |
| A | JP 2012-205552 A (C I KASEI CO., LTD.) 25 October 2012 (2012-10-25)<br>See entire document. | 1-16 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 July 2024** | **29 July 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/005612** |

### C. DOCUMENTS CONSIDERED TO BE RELEVANT

| Category* | Citation of document, with indication, where appropriate, of the relevant passages | Relevant to claim No. |
| --- | --- | --- |
| A | US 10647093 B2 (TIPA CORP. LTD.) 12 May 2020 (2020-05-12) <br> See entire document. | 1-16 |
| A | US 9884471 B2 (TIPA CORP. LTD.) 06 February 2018 (2018-02-06) <br> See entire document. | 1-16 |

Form PCT/ISA/210 (second sheet) (July 2022)

<table>
<tr><td colspan="2">INTERNATIONAL SEARCH REPORT<br>Information on patent family members</td><td colspan="2">International application No.<br><br>**PCT/KR2024/005612**</td></tr>
</table>

| Patent document cited in search report | | | Publication date (day/month/year) | Patent family member(s) | | | Publication date (day/month/year) |
|---|---|---|---|---|---|---|---|
| JP | 2006-198931 | A | 03 August 2006 | None | | | |
| WO | 2013-184822 | A1 | 12 December 2013 | CN | 104379671 | A | 25 February 2015 |
| | | | | CN | 109265943 | A | 25 January 2019 |
| | | | | CN | 109265943 | B | 10 August 2021 |
| | | | | EP | 2855584 | A1 | 08 April 2015 |
| | | | | EP | 3424990 | A1 | 09 January 2019 |
| | | | | EP | 3424990 | B1 | 05 May 2021 |
| | | | | ES | 2879250 | T3 | 22 November 2021 |
| | | | | US | 10113060 | B2 | 30 October 2018 |
| | | | | US | 2015-0132512 | A1 | 14 May 2015 |
| | | | | US | 2015-0147929 | A1 | 28 May 2015 |
| | | | | US | 9353258 | B2 | 31 May 2016 |
| | | | | WO | 2013-184836 | A1 | 12 December 2013 |
| KR | 10-2014-0116868 | A | 06 October 2014 | AU | 2012-354059 | A1 | 17 July 2014 |
| | | | | AU | 2012-354059 | B2 | 22 September 2016 |
| | | | | AU | 2012-354059 | C1 | 23 March 2017 |
| | | | | AU | 2016-277538 | A1 | 12 January 2017 |
| | | | | BR | 112014015501 | A2 | 13 June 2017 |
| | | | | BR | 112014015501 | A8 | 04 July 2017 |
| | | | | CA | 2858972 | A1 | 20 June 2013 |
| | | | | CN | 104364081 | A | 18 February 2015 |
| | | | | EP | 2790920 | A1 | 22 October 2014 |
| | | | | HK | 1203453 | A1 | 30 October 2015 |
| | | | | JP | 2015-507653 | A | 12 March 2015 |
| | | | | JP | 6235481 | B2 | 22 November 2017 |
| | | | | NZ | 626602 | A | 25 September 2015 |
| | | | | RU | 2014128962 | A | 10 February 2016 |
| | | | | RU | 2643561 | C2 | 02 February 2018 |
| | | | | SG | 11201403245 | A | 30 July 2014 |
| | | | | US | 2014-0329039 | A1 | 06 November 2014 |
| | | | | WO | 2013-088443 | A1 | 20 June 2013 |
| | | | | WO | 2013-088443 | A8 | 29 August 2013 |
| JP | 2012-205552 | A | 25 October 2012 | JP | 5925994 | B2 | 25 May 2016 |
| US | 10647093 | B2 | 12 May 2020 | AU | 2014-338515 | A1 | 09 June 2016 |
| | | | | AU | 2014-338515 | B2 | 14 December 2017 |
| | | | | CA | 2928718 | A1 | 30 April 2015 |
| | | | | CA | 2928718 | C | 16 July 2019 |
| | | | | CN | 105916919 | A | 31 August 2016 |
| | | | | EP | 3060601 | A1 | 31 August 2016 |
| | | | | EP | 3060601 | A4 | 03 May 2017 |
| | | | | EP | 3060601 | B1 | 06 January 2021 |
| | | | | ES | 2857200 | T3 | 28 September 2021 |
| | | | | HR | P20210337 | T1 | 25 June 2021 |
| | | | | IL | 245229 | B | 27 February 2020 |
| | | | | IL | 272726 | A | 30 April 2020 |
| | | | | IL | 272726 | B | 30 November 2020 |
| | | | | IL | 278529 | B | 01 January 2022 |
| | | | | JP | 2016-537495 | A | 01 December 2016 |
| | | | | KR | 10-2016-0106556 | A | 12 September 2016 |
| | | | | KR | 10-2382498 | B1 | 01 April 2022 |

Form PCT/ISA/210 (patent family annex) (July 2022)

**INTERNATIONAL SEARCH REPORT**
Information on patent family members

International application No.

**PCT/KR2024/005612**

| Patent document cited in search report | | | Publication date (day/month/year) | Patent family member(s) | | | Publication date (day/month/year) |
|---|---|---|---|---|---|---|---|
| | | | | NZ | 720429 | A | 28 May 2021 |
| | | | | PL | 3060601 | T3 | 26 July 2021 |
| | | | | PT | 3060601 | T | 12 March 2021 |
| | | | | SG | 11201603324 | A | 30 May 2016 |
| | | | | US | 10239292 | B2 | 26 March 2019 |
| | | | | US | 11007758 | B2 | 18 May 2021 |
| | | | | US | 2016-0257098 | A1 | 08 September 2016 |
| | | | | US | 2019-0152203 | A1 | 23 May 2019 |
| | | | | US | 2020-0290327 | A1 | 17 September 2020 |
| | | | | WO | 2015-059709 | A1 | 30 April 2015 |
| US | 9884471 | B2 | 06 February 2018 | CY | 1118251 | T1 | 28 June 2017 |
| | | | | DK | 2582521 | T3 | 05 December 2016 |
| | | | | EP | 2582521 | A2 | 24 April 2013 |
| | | | | EP | 2582521 | B1 | 24 August 2016 |
| | | | | EP | 2995642 | A2 | 16 March 2016 |
| | | | | EP | 2995642 | A3 | 15 June 2016 |
| | | | | EP | 2998342 | A2 | 23 March 2016 |
| | | | | EP | 2998342 | A3 | 15 June 2016 |
| | | | | ES | 2604113 | T3 | 03 March 2017 |
| | | | | HK | 1221728 | A1 | 09 June 2017 |
| | | | | HK | 1221970 | A1 | 16 June 2017 |
| | | | | HR | P20161425 | T1 | 16 December 2016 |
| | | | | LT | 2582521 | T | 12 December 2016 |
| | | | | PL | 2582521 | T3 | 28 February 2017 |
| | | | | PT | 2582521 | T | 21 November 2016 |
| | | | | US | 2013-0087560 | A1 | 11 April 2013 |
| | | | | US | 2015-0175759 | A1 | 25 June 2015 |
| | | | | US | 9228079 | B2 | 05 January 2016 |
| | | | | WO | 2011-158240 | A2 | 22 December 2011 |
| | | | | WO | 2011-158240 | A3 | 12 April 2012 |

Form PCT/ISA/210 (patent family annex) (July 2022)

**REFERENCES CITED IN THE DESCRIPTION**

**Patent documents cited in the description**

- JP 2006272712 A